# EUROPÄISCHE PATENTSCHRIFT

(11) **EP 1 625 969 B1**
(45) Veröffentlichungstag und Bekanntmachung des Hinweises auf die Patenterteilung: **13.10.2010**
(21) Anmeldenummer: 05016968.9
(22) Anmeldetag: 04.08.2005
(51) Int. Cl.: B60N 2/28

(54) **Kindersitz für Kraftfahrzeuge**
Vehicle child seat
Siège enfant pour véhicule automobile

(30) Priorität: 12.08.2004 DE 102004039204; 23.09.2004 DE 102004046163
(43) Veröffentlichungstag der Anmeldung: 15.02.2006
(73) Patentinhaber: CYBEX Industrial Ltd., Causeway Bay Hong Kong (CN)
(72) Erfinder: Pos, Martin, 95445 Bayreuth (DE)
(74) Vertreter: Popp, Eugen

(56) Entgegenhaltungen:
- EP-A- 0 113 645
- EP-A- 1 084 900
- EP-A- 1 336 531
- DE-U1- 9 206 122
- US-A1- 2003 132 588

## Beschreibung

Die Erfindung betrifft einen Kindersitz für Kraftfahrzeuge, mit einer Sitzschale und Rückenlehne, an deren oberem Ende eine Kopfstütze mit nach vorne ragenden Seitenwangen angeordnet ist.

Derartige Kindersitze sind allgemein bekannt. Sie werden in der Regel mittels der in den Kraftfahrzeugen vorhandenen Sicherheitsgurte auf dem Rück- oder Vordersitz eines Kraftfahrzeuges fixiert. Dafür gibt es die unterschiedlichsten Konstruktionen, wobei diesbezüglich nur beispielhaft auf die DE 43 28 635 C2 verwiesen wird.

Im vorliegenden Fall geht es um einen erhöhten Komfort und erhöhte Sicherheit für das Kind. In diesem Zusammenhang gibt es Kindersitze, die insgesamt aus einer aufrechten Position in eine geneigte Schlafposition und umgekehrt kippbar sind. Dabei handelt es sich jedoch um relativ aufwendige Konstruktionen, die auch entsprechend schwer gebaut sind. Darüber hinaus besteht die Gefahr, dass in der Schlafposition das Kind bei starker Abbremsung des Fahrzeuges unter den Sicherheitsgurten, insbesondere unter dem Beckengurt aus dem Kindersitz nach vorne herausrutscht. In diesem Fall besteht insbesondere auch die Gefahr, dass das Kind durch den Diagonalgurt stranguliert und ernsthaft verletzt wird. Um dies zu verhindern, ist es geboten, bei derartigen Kindersitzen sog. 5-Punkt-Sicherheitsgurte anzuwenden.

Alternativ zu den vorgenannten Kindersitzen, insbesondere für die Gewichtsklasse von 15 kg bis 36 kg (ca. 3½ bis 12 Jahre) werden Kindersitze verwenden, bei denen die Kinder samt Kindersitz mit den fahrzeugeigenen Gurten fixiert sind. Die Rückenlehnen dieser Kindersitze sind in der Regel mit dem Sitzteil starr verbunden. Manche Ausführungen weisen auch Rückenlehnen auf, die am Sitzteil um eine Horizontalachse verschwenkbar sind, so dass sie an die Neigung der Fahrzeugrückenlehne anpassbar sind und eine nach hinten geneigte Ruheposition für das Kind ermöglichen.

In den meisten Fällen sind auf die Rückenlehne noch Kopfstützen aufgesteckt. Diese können in Anpassung an die Körpergröße des Kindes in der Höhe verstellt werden. Diese Kopfstützen weisen in der Regel Seitenwangen zur seitlichen Abstützung und Verhinderung von Verletzungen des Kopfes bei Seitenaufprall auf. Nachteilig bei dieser Ausführung ist, dass keine Maßnahmen vorgesehen sind, die beim Einschlafen des Kindes und der damit verbundenen Entspannung der Nackenmuskulatur verhindern, dass der Kopf des Kindes nach vorne kippt. Damit ergibt sich auch ein leichtes Übergewicht des gesamten Oberkörpers nach vorne mit der Folge, dass dieser ebenfalls nach vorne kippt. Wenn dann ein Seitenaufprall erfolgt, ist das Kind praktisch ungestützt. Insbesondere sind die Seitenwangen der Kopfstütze nicht mehr wirksam.

Bei einem Frontaufprall ist der nach vorne geneigte Oberkörper in der Regel aus bzw. über den Diagonalgurt gerutscht. Damit ist auch der Oberkörper weitgehend ungesichert.

Aus der US 2003/132588 A1 ist noch ein Kindersitz bekannt, dessen Kopfstütze parallel zur Stützfläche der Rückenlehne verschwenkbar ist, so daß die Kopfstütze bei Bedarf auch als vorgelagerte Rückenlehne dienen kann. Damit läßt sich jedoch eine Wachstellung nicht von einer Schlafstellung unterscheiden.

Aus der EP 1 336 531 ist ein Kindersitz gemäß dem Oberbegriff des Anspruchs 1 bekannt.

Zu der Konstruktion gemäß der EP 1 336 531 A2 sei noch erwähnt, daß dort eine Neigungsverstellung der Kopflehne relativ zu den beiden Seitenwangen nicht vorgesehen ist mit der Folge, daß auch bei dieser Konstruktion nicht zwischen einer Wachstellung einerseits und Schlafstellung andererseits unterschieden wird.

Der vorliegenden Erfindung liegt die Aufgabe zugrunde, einen Kindersitz für Kraftfahrzeuge zu schaffen, der einen hohen Komfort bei minimalem konstruktivem Aufwand und einer im Vergleich zum Stand der Technik erhöhten Sicherheit für das Kind gewährleistet.

Diese Aufgabe wird erfindungsgemäß durch die kennzeichnenden Merkmale des Anspruches 1 gelöst. Konstruktive Details und Weiterentwicklungen der Erfindung sind in den Unteransprüchen beschrieben.

Der Kern der vorliegenden Erfindung liegt also darin, dass die Kopflehne sich aus einer aufrechten Wachposition in eine nach hinten geneigte Ruhe- bzw. Schlafposition bringen läßt, um zu verhindern, dass der Kopf und ggf. der gesamte Oberkörper eines Kindes im Schlaf aus der Sitzkonstruktion nach vorne kippt und der Oberkörper sich aus dem Diagonalgurt herausdreht. Die Sicherheit des Kindes z.B. bei einem Seiten- oder Frontal-Aufprallunfall bleibt bei dieser Konstruktion unverändert hoch.

Vorzugsweise läßt sich die Neigung der sich zwischen den beiden Seitenwangen der Kopfstütze befindlichen Kopflehne entweder stufenlos oder schrittweise verstellen. Letztlich ist dies eine Frage des baulichen Aufwandes, den der Hersteller treiben möchte.

Von wesentlicher Bedeutung ist auch noch, dass die Kopfstütze höhenverstellbar an der Rückenlehne gelagert ist. Zu diesem Zweck ist die Kopfstütze vorzugsweise am oberen Ende eines an der Rückenlehne höhenverstellbar gelagerten Kopfstützenhalters angeordnet, der rohr- oder brettartig ausgebildet sein kann. Bei brettartiger Ausbildung des Kopfstützenhalters ist im Bereich zwischen den beiden Seitenwangen vorzugsweise eine keilförmige Ausnehmung ausgebildet, in die hinein die zwischen den Seitenwangen angeordnete Kopflehne hineinschwenkbar ist. Das Schwenklager der Kopflehne befindet sich vorzugsweise am unteren, der Sitzschale zugewandten Ende derselben.

Weitere konstruktive Details des Schwenklagers sowie der Maßnahmen zur Positionierung der Kopfstütze bzw. Kopflehne sind in den Ansprüchen 8 ff näher beschrieben.

Nachstehend wird eine bevorzugte Ausführungsform einer erfindungsgemäß ausgebildeten Kopfstütze anhand der beigefügten Zeichnung näher erläutert. Diese zeigt in
- Fig. 1: eine erfindungsgemäß ausgebildete Kopfstützen-Konstruktion in perspektivischer Frontansicht;
- Fig. 2: die Kopfstützen-Konstruktion gemäß Fig. 1 in perspektivischer Explosionsdarstellung;
- Fig. 3: eine der Fig. 1 entsprechende Darstellung einer abgewandelten Ausführungsform einer Kopfstützen-Konstruktion in perspektivischer Darstellung; und
- Fig. 4: das Prinzip der erfindungsgemäßen Kopfstütze in schematischer Seitenansicht unter Darstellung des Schwenkmechanismus für eine zwischen den Seitenwangen einer Kopfstütze angeordneten Kopflehne.

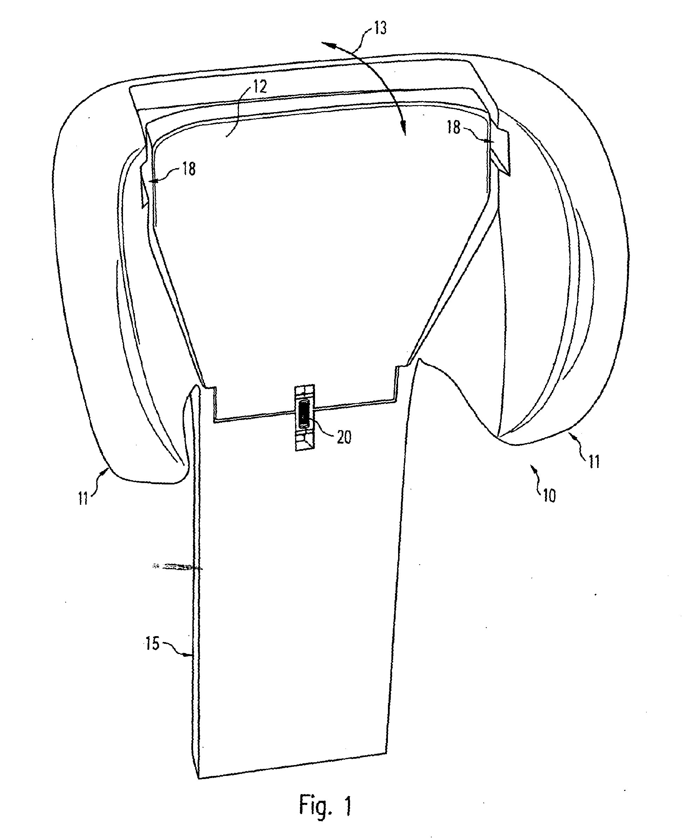

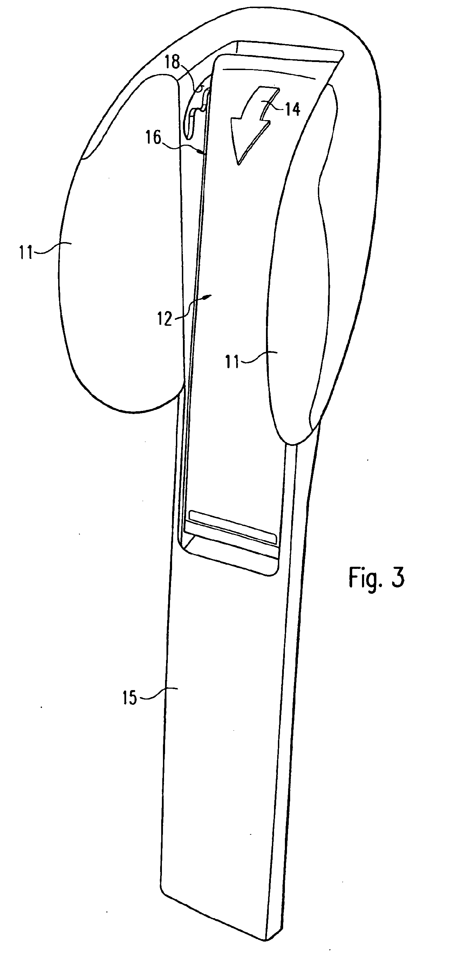

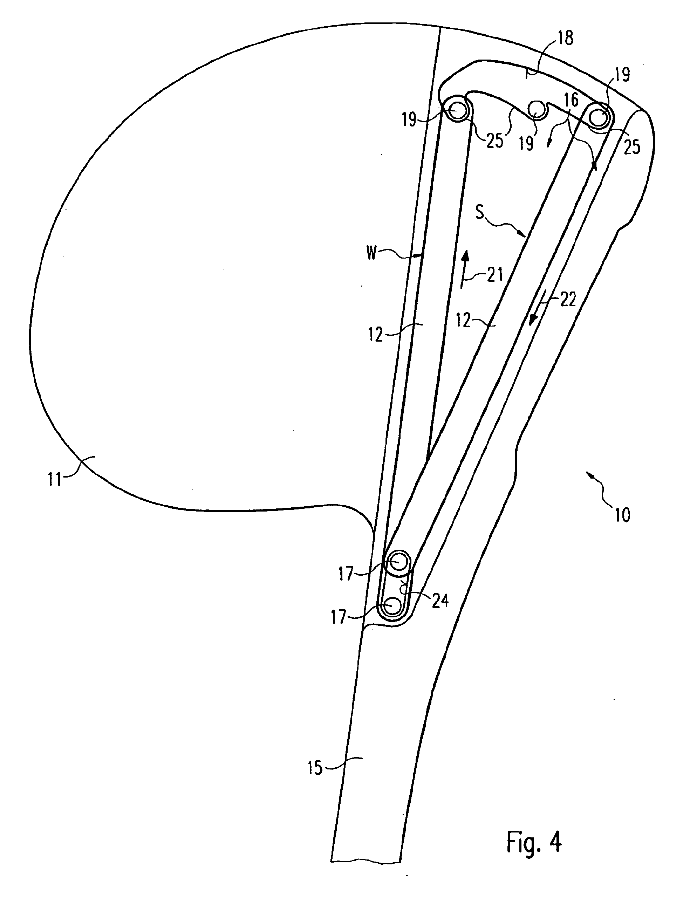

In den Figuren 1 bis 3 ist eine Kopfstützen-Konstruktion gemäß Erfindung schematisch dargestellt. Es handelt sich um die Kopfstütze eines Kindersitzes für Kraftfahrzeuge, die eine Sitzschale und Rückenlehne umfassen. Entsprechend den Figuren 1 bis 3 ist die Kopfstütze 10 mit nach vorne ragenden Seitenwangen 11 versehen. Zwischen den beiden Seitenwangen 11 ist eine Kopflehne 12 angeordnet, und zwar so, dass ihre Neigung relativ zur Rückenlehne verstellbar ist. Diese Verstellbarkeit ist in Fig. 1 mit dem Doppelpfeil 13 und in Fig. 3 mit dem Pfeil 14 angedeutet. Beim dargestellten Ausführungsbeispiel ist die Kopflehne verschwenkbar, und zwar relativ zu den beiden Seitenwangen 11 sowie zwischen einer aufrechten, sich etwa parallel zur Rückenlehne erstreckenden Wachposition und einer nach hinten geneigten Ruhe- bzw. Schlafposition. Es wird diesbezüglich auf Fig. 4 verwiesen, in der diese beiden Positionen der Kopflehne 12 jeweils unterschiedlich dunkel unterlegt dargestellt sind. Die Wachposition ist mit dem Bezugsbuchstaben "W" und die Ruhe- bzw. Schlafposition mit dem Bezugsbuchstaben "S" gekennzeichnet.

Die Neigung der Kopflehne 12 läßt sich entweder stufenlos oder entsprechend Fig. 4 schrittweise verstellen.

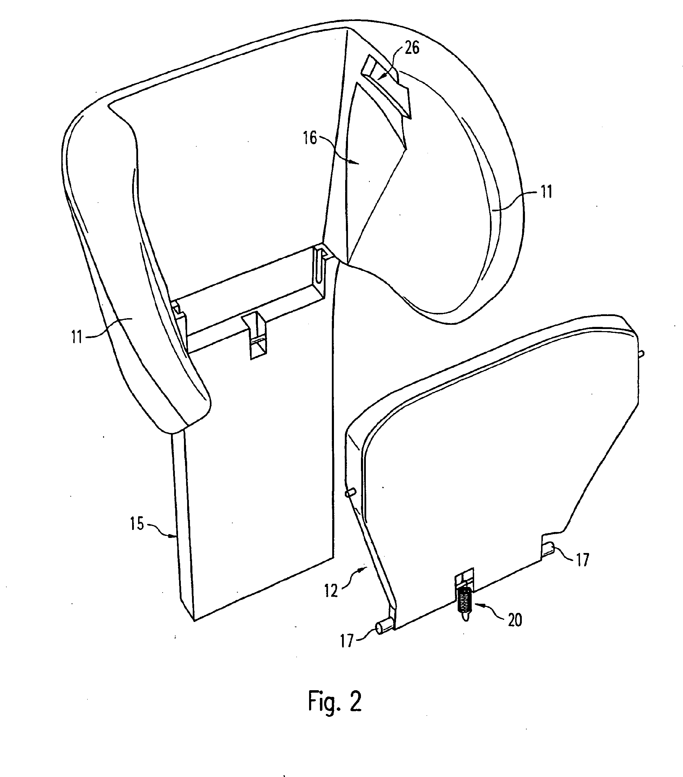

Besonders hervorzuheben wäre, dass die Kopfstütze 10 höhenverstellbar an der hier nicht näher dargestellten Rückenlehne gelagert ist. Zu diesem Zweck ist die Kopfstütze 10 am oberen Ende eines an der Rückenlehne höhenverstellbar gelagerten Kopfstützenhalters 15 angeordnet, der bei der dargestellten Ausführungsform nach den Figuren 1 und 2 brettartig ausgebildet ist. Da es im vorliegenden Fall auf den Mechanismus für die Höhenverstellung der Kopfstütze nicht ankommt, ist dieser hier nicht näher dargestellt und beschrieben. Der Fachmann weiß jedoch, wie er eine derartige Höhenverstellung konstruktiv löst. Auf jeden Fall muß zu diesem Zweck der brettartig ausgebildete Kopfstützenhalter 15 innerhalb der Rückenlehne, vorzugsweise an der Rückseite derselben, verschieblich gelagert sein. Des weiteren sind an der Rückenlehne einerseits und am Kopfstützenhalter 15 andererseits komplementäre Rastmittel vorgesehen, um die Kopfstütze in unterschiedlichen Höhen relativ zur Sitzfläche des Kindersitzes zu fixieren. Insofern handelt es sich um einen "mitwachsenden" Kindersitz.

Die nach vorne ragenden Seitenwangen 11 sind bei der dargestellten Ausführungsform sowohl nach den Figuren 1 und 2 als auch nach Fig. 3 am oberen Ende des brettartig ausgebildeten Kopfstützenhalters 15 angeformt. Die Seitenwangen 11 sind also integraler Teil des Kopfstützenhalters 15.

Wie die Figuren 3 und 4 erkennen lassen, ist im Bereich zwischen den beiden Seitenwangen 11 eine keilförmige Ausnehmung 16 ausgebildet, in die hinein die zwischen den Seitenwangen 11 angeordnete Kopflehne 12 hineinverschwenkbar ist (siehe Figuren 3 und 4). Das untere, der Sitzschale zugewandte Ende der Kopflehne 12 ist um eine horizontale Querachse 17 an der Rückenlehne bzw. hier am Kopfstützenhalter 15 verschwenkbar gelagert. Im oberen Bereich der Kopflehne 12 sind Mittel zur Verhakung in unterschiedlichen Kippstellungen relativ zur Rückenlehne bzw. zum Kopfstützenhalter 15 vorgesehen, so wie dies in Fig. 4 durch die Bezugsziffern 18, 19 angedeutet ist.

Fig. 4 läßt des weiteren erkennen, dass die Kopflehne 12 samt Schwenklager 17 anhebbar ist, und zwar vorzugsweise entgegen der Wirkung einer Zugfeder 20 (siehe Figuren 1 und 2), so dass beim Anheben der Kopflehne 12 in Richtung des Pfeiles 21 in Fig. 4 die Verhakung für eine erste Kipposition, in Fig. 4 Wachposition "W", lösbar und die Kopflehne 12 aus dieser Wachposition in eine zweite Kipposition, in Fig. 4 Schlafposition "S", bringbar und in dieser durch Absenken der Kopflehne in Richtung des Pfeiles 22 wieder verhakbar ist, bzw. umgekehrt. Der Fig. 4 läßt sich auch noch entnehmen, dass die Kopflehne 12 in eine Zwischenposition 23 zwischen Wachposition einerseits und Schlafposition andererseits bringbar ist.

Die dargestellte Ausführungsform hat noch den großen Vorteil, dass bei einem starken Abbremsen bzw. auch Frontalaufprall sich die Kopflehne 12 selbsttätig aufgrund ihrer Massenträgheit nach vorne bewegt und in der Wachposition "W" verhakt. Damit ist der Kopf des Kindes beim Zurückschnellen nach Beendigung des Bremsvorganges bzw. Aufpralls in der aufrechten Position abgestützt. Ein Schleudertrauma lässt sich dadurch erheblich reduzieren im Vergleich zu einer dauerhaft nach hinten geneigten Kopflehne bzw. wie beim Stand der Technik zu einer nach hinten geneigten Rückenlehne mit starr daran befestigter Kopfstütze.

Das Schwenklager 17 der Kopflehne 12 umfaßt zwei an den beiden Seiten derselben vorstehende Lagerzapfen oder eine durchgehende Schwenkachse, die zu beiden Seiten der Kopflehne 12 über diese vorsteht. Diese Lagerzapfen 17 korrespondieren mit in der Rückenlehne bzw. hier im Kopfstützenhalter 15 angeordnete, sich etwa parallel zur Rückenlehne bzw. zum Kopfstützenhalter 15 erstreckende Langlochaufnahmen 24. Im oberen Bereich der Kopflehne 12 steht zumindest an einer Seite, vorzugsweise an beiden Seiten derselben ein Positionierzapfen 19 seitlich vor. Diese korrespondieren jeweils mit einer Kulissenführung 18, die jeweils an den einander zugewandten Seiten der Seitenwangen 11 ausgebildet sind (siehe dazu auch Fig. 3, wo die Kulissenführung integraler Bestandteil der Seitenwange ist, und zwar noch im Bereich der keilförmigen Ausnehmung 16). Die Kulissenführung 18 ist bogenförmig entsprechend dem Schwenkkreis der Kopflehne 12 um die Schwenkachse 17. Des weiteren umfaßt die Kulissenführung 18 wenigstens zwei, bei der Ausführungsform nach den Figuren 3 und 4 drei, Aufnahmeschlitze 25, in die die Positionierzapfen 19 einführbar sind. Auf jeden Fall sind zwei derartige Aufnahmeschlitze 25 vorgesehen, wobei der eine die Wachposition und der andere die Schlafpösition der Kopflehne 12 definiert. Im vorliegenden Fall wird eine Zwischenposition 23 durch einen mittleren Aufnahmeschlitz 25 definiert.

Die vorgenannte Kopfstützen-Konstruktion besteht vorzugsweise aus Formschaumteilen, vorzugsweise aber aus im Spritzguß- oder Blasverfahren hergestellten Kunststoffteilen (z.B. Polyethylen). Zusätzlich können die einzelnen Teile durch eine Polsterung oder einen Stoffbezug abgedeckt sein.

Die keilförmige Ausnehmung 16, in die die Kopflehne 12 hineinverschwenkbar ist, erlaubt einen Schwenkwinkel von etwa 10° bis 20°, insbesondere etwa 15° bis 17°.

Die Kulissenführung 18 kann - wie bereits anhand der Fig. 3 ausgeführt - integraler Bestandteil der Seitenwangen oder des Kopfstützenhalters sein. Alternativ ist es auch denkbar, die Kulissenführung 18 als gesondertes Bauteil, insbesondere aus Metall, zur Verfügung zu stellen. Entsprechende Führungslaschen werden dann in entsprechende seitliche Ausnehmungen der Seitenwangen eingefügt. In Fig. 2 ist eine derartige seitliche Ausnehmung zur Aufnahme einer Kulissenführung 18 mit der Bezugsziffer 26 gekennzeichnet.

An der oberen Begrenzungskante der Kopflehne 12 ist vorzugsweise noch eine Griffmulde oder ein Handgriff angeformt, die das Anheben der Kopflehne 12 gegen die Wirkung der Feder 20 erleichtert.

Die vorgenannte Beschreibung zeigt, dass die Kopfstütze unabhängig von der Höhenlage derselben relativ zur Sitzfläche des Kindersitzes verschwenkbar ist.

### Bezugszeichen:

- 10: Kopfstütze
- 11: Seitenwange
- 12: Kopflehne
- 13: Doppelpfeil
- 14: Pfeil
- 15: Kopfstützenhalter
- 16: Ausnehmung
- 17: Quer- bzw. Schwenkachse
- 18: Kulissenführung
- 19: Zapfen bzw. Positionierzapfen
- 20: Zugfeder
- 21: Pfeil
- 22: Pfeil
- 23: Zwischenposition
- 24: Langlochaufnahme
- 25: Aufnahmeschlitz
- 26: Ausnehmung
- W: = Wachposition
- S: = Ruhe- bzw. Schlafposition

## Patentansprüche

1. Kindersitz für Kraftfahrzeuge mit einer Sitzschale und einer Rückenlehne, an deren oberem Ende eine Kopfstütze (10) mit nach vorne ragenden Seitenwangen (11) angeordnet ist,
**dadurch gekennzeichnet, dass**
die Neigung einer sich zwischen den beiden Seitenwangen (11) der Kopfstütze (10) befindlichen Kopflehne (12) relativ zu den beiden Seitenwangen (11) und relativ zur Rückenlehne verstellbar ist (Pfeile 13, 14), und zwar zwischen einer aufrechten, sich etwa parallel zur Rückenlehne erstreckenden Wachposition (W) und einer nach hinten geneigten Ruhe- bzw. Schlafposition (S).

2. Kindersitz nach Anspruch 1,
**dadurch gekennzeichnet, dass** sich die Neigung der Kopflehne (12) entweder stufenlos oder schrittweise verstellen läßt.

3. Kindersitz nach Anspruch 1 oder 2,
**dadurch gekennzeichnet, dass** die Kopfstütze (10) höhenverstellbar an der Rückenlehne gelagert ist.

4. Kindersitz nach Anspruch 3,
**dadurch gekennzeichnet, dass** die Kopfstütze (10) am oberen Ende eines an der Rückenlehne höhenverstellbar gelagerten Kopfstützenhalters (15) angeordnet ist.

5. Kindersitz nach Anspruch 4,
**dadurch gekennzeichnet, dass**
der Kopfstützenhalter (15) rohr- oder brettartig ausgebildet ist.

6. Kindersitz nach Anspruch 5,
**dadurch gekennzeichnet, dass**
am oberen Ende des brettartig ausgebildeten Kopfstützenhalters (15) die nach vorne ragenden Seitenwangen (11) angeformt sind, wobei im Bereich zwischen diesen beiden Seitenwangen (11) eine keilförmige Ausnehmung (16) ausgebildet ist, in die die zwischen den Seitenwangen (11) angeordnete Kopflehne (12) hinein verschwenkbar ist.

7. Kindersitz nach Anspruch 6,
**dadurch gekennzeichnet, dass**
das untere, der Sitzschale zugewandte Ende der Kopflehne (12) um eine horizontale Querachse (17) an der Rückenlehne oder dem Kopfstützenhalter (15) verschwenkbar gelagert ist, während im oberen Bereich der Kopflehne (12) Mittel (18, 19) zur Verhakung in unterschiedlichen Kippstellungen relativ zur Rückenlehne oder zum Kopfstützenhalter (15) vorgesehen sind.

8. Kindersitz nach Anspruch 7,
**dadurch gekennzeichnet, dass**
die Kopflehne (12) samt Schwenklager (17) anhebbar ist, insbesondere gegen die Wirkung eines elastischen Elements (Zugfeder 20), so dass beim Anheben der Kopflehne (12) die Verhakung für eine erste Kipposition derselben lösbar und die Kopflehne (12) aus dieser ersten Kipposition in eine zweite Kipposition bringbar und in dieser durch Absenken wieder verhakbar ist, bzw. umgekehrt.

9. Kindersitz nach Anspruch 8,
**dadurch gekennzeichnet, dass**
das Schwenklager der Kopflehne (12) zwei an den beiden Seiten derselben vorstehende Lagerzapfen (17) umfaßt, die mit in der Rückenlehne bzw. im Kopfstützenhalter (15) angeordneten, sich etwa parallel zur Rückenlehne bzw. zum Kopfstützenhalter (15) erstreckenden Langlochaufnahmen (24) korrespondieren.

10. Kindersitz nach einem der Ansprüche 7 bis 9,
**dadurch gekennzeichnet, dass**
im oberen Bereich der Kopflehne (12) an wenigstens einer Seite derselben ein Positionierzapfen (19) oder dgl. -vorsprung seitlich vorsteht, der mit einer an der Rückenlehne oder am Kopfstützenhalter (15) angeordneten Kulissenführung (18) korrespondiert, die bogenförmig entsprechend dem Schwenkkreis der Kopflehne (12) ausgebildet ist und wenigstens zwei die Wachposition (W) der Kopflehne (12) einerseits und Schlafposition (S) der Kopflehne (12) andererseits definierende Aufnahmeschlitze (25) aufweist, in die der Positionierzapfen (19) wahlweise einführbar ist.

## Claims

1. Child seat for motor vehicles, having a seat shell and a back rest at the upper end of which there is arranged a head support (10) having forwardly projecting side wings (11),
**characterized in that**
the inclination of a head rest (12) located between the two side wings (11) of the head support (10) is adjustable relative to the two side wings (11) and relative to the back rest (arrows 13, 14), the inclination being adjustable between an upright awake position (W) running approximately parallel to the back rest and a rearwardly inclined resting or sleep position (S).

2. Child seat according to claim 1,
**characterized in that**
the inclination of the head rest (12) can be adjusted either steplessly or stepwise.

3. Child seat according to claim 1 or 2,
**characterized in that**
the head support (10) is height-adjustably mounted on the back rest.

4. Child seat according to claim 3,
**characterized in that**
the head support (10) is arranged at the upper end of a head support holder (15) height-adjustably mounted on the back rest.

5. Child seat according to claim 4,
**characterized in that**
the head support holder (15) is of tube-like or board-like construction.

6. Child seat according to claim 5,
**characterized in that**
the forwardly projecting side wings (11) are formed integrally with the upper end of the board-like head support holder (15), there being provided in the region between the two side wings (11) a wedge-shaped recess (16) into which the head rest (12) arranged between the side wings (11) is pivotable.

7. Child seat according to claim 6,
**characterized in that**
the lower end of the head rest (12) facing the seat shell is mounted on the back rest or the head support holder (15) so as to be pivotable about a horizontal transverse axis (17), while in the upper region of the head rest (12) there are provided means (18, 19) for engagement in different tilted positions relative to the back rest or to the head support holder (15).

8. Child seat according to claim 7,
**characterized in that**
the head rest (12) including the pivot bearing (17) can be lifted, especially against the action of a resilient element (tension spring 20), so that when the head rest (12) is lifted the engagement for a first tilted position thereof can be released and the head rest (12) moved out of that first tilted position into a second tilted position and, by being lowered, re-engaged **in that** position, or *vice versa.*

9. Child seat according to claim 8,
**characterized in that**
the pivot bearing of the head rest (12) comprises two journals (17) projecting on respective sides thereof, which journals are associated with oblong receiving apertures (24) arranged in the back rest or in the head support holder (15) and extending approximately parallel to the back rest or to the head support holder (15).

10. Child seat according to any one of claims 7 to 9,
**characterized in that**
in the upper region of the head rest (12), on at least one side thereof, there is a laterally projecting positioning pin (19) or like projection which is associated with a slotted guide means (18) arranged on the back rest or on the head support holder (15), which slotted guide means has an arcuate shape corresponding to the pivot arc of the head rest (12) and has at least two receiving slots (25) defining the awake position (W) of the head rest (12) on the one hand and the sleep position (S) of the head rest (12) on the other hand, into which slots the positioning journal (19) is introducible as desired.

## Revendications

1. Siège enfant pour véhicules automobiles comportant une coque d'assise et un dossier, à l'extrémité supérieure duquel est disposé un appui-tête (10) avec des joues latérales (11) en saillie vers l'avant,
**caractérisé en ce que**
l'inclinaison d'un repose-tête (12) situé entre les deux joues latérales (11) de l'appui-tête (10) est réglable par rapport aux deux joues latérales (11) et par rapport au dossier (flèches 13, 14), et ce entre une position de veille (W) droite, s'étendant de manière à peu près parallèle au dossier et une position de repos ou de sommeil (S) inclinée vers l'arrière.

2. Siège enfant selon la revendication 1,
**caractérisé en ce que**
l'inclinaison du repose-tête (12) peut être réglée soit en continu soit pas à pas.

3. Siège enfant selon la revendication 1 ou 2,
**caractérisé en ce que**
l'appui-tête (10) est logé de manière réglable en hauteur au niveau du dossier.

4. Siège enfant selon la revendication 3,
**caractérisé en ce que**
l'appui-tête (10) est disposé à l'extrémité supérieure d'un support d'appui-tête (15) logé de manière réglable en hauteur au niveau du dossier.

5. Siège enfant selon la revendication 4,
**caractérisé en ce que**
le support d'appui-tête (15) est réalisé en forme de tube ou de planche.

6. Siège enfant selon la revendication 5,
**caractérisé en ce que**
les joues latérales (11) en saillie vers l'avant sont formées à l'extrémité supérieure du support d'appui-tête (15) réalisé en forme de planche, un évidement cunéiforme (16), dans lequel le repose-tête (12) disposé entre les joues latérales (11) peut entrer par pivotement, étant réalisé dans la zone entre ces deux joues latérales (11).

7. Siège enfant selon la revendication 6,
**caractérisé en ce que**
l'extrémité inférieure du repose-tête (12) tournée vers la coque d'assise est logée de manière pivotante autour d'un axe transversal horizontal (17) au niveau du dossier ou du support d'appui-tête (15), alors que dans la zone supérieure du repose-tête (12) sont prévus des moyens (18, 19) d'accrochage dans différentes positions d'inclinaison par rapport au dossier ou au support d'appui-tête (15).

8. Siège enfant selon la revendication 7,
**caractérisé en ce que**
le repose-tête (12) peut être soulevé avec le palier pivotant (17), en particulier contre l'action d'un élément élastique (ressort de traction 20) si bien que lors du soulèvement du repose-tête (12), l'accrochage pour une première position d'inclinaison de celui-ci peut être désolidarisé et le repose-tête (12) peut être amené de cette première position d'inclinaison à une deuxième position d'inclinaison et peut à nouveau être accroché dans celle-ci en le descendant, et inversement.

9. Siège enfant selon la revendication 8,
**caractérisé en ce que**
le palier pivotant du repose-tête (12) comporte deux tourillons (17), dépassant des deux côtés de celui-ci, qui sont en correspondance avec des évidements de trou oblong (24) agencés dans le dossier respectivement dans le support d'appui-tête (15) et s'étendant de manière à peu près parallèle au dossier respectivement au support d'appui-tête (15).

10. Siège enfant selon l'une quelconque des revendications 7 à 9,
**caractérisé en ce que**
dans la zone supérieure du repose-tête (12) au niveau d'au moins un côté de celui-ci, une broche (19) ou saillie de positionnement similaire est en saillie radiale, laquelle est en correspondance avec un guidage de coulisse (18), disposé au niveau du dossier ou au niveau du support d'appui-tête (15), qui est réalisé en arc conformément au cercle de pivotement du repose-tête (12) et présente au moins deux encoches de réception (25) définissant d'un coté la position de veille (W) du repose-tête (12) et de l'autre côté la position de sommeil (S) du repose-tête (12), dans lesquelles la broche de positionnement (19) peut être introduite au choix.
